# FASCICULE DE BREVET EUROPEEN

(11) **EP 2 093 408 B1**
(45) Date de publication et mention de la délivrance du brevet: **19.12.2018**
(21) Numéro de dépôt: 09152768.9
(22) Date de dépôt: 13.02.2009
(51) Int. Cl.: F02K 9/60, F02K 9/50

(54) **RÉSERVOIR**
TANK
TANK

(30) Priorité: 19.02.2008 FR 0851038
(43) Date de publication de la demande: 26.08.2009
(73) Titulaire: ArianeGroup SAS, 75015 Paris (FR)
(72) Inventeur: Conrardy, Jean-Marie, 27940 Courcelles sur Seine (FR); Peyrisse, Daniel, 27950 Saint Marcel (FR); Le Louedec, Dominique, 27950 Saint Marcel (FR)
(74) Mandataire: Delumeau, François Guy

(56) Documents cités:
- DE-A1- 2 136 188
- DE-B- 1 104 267
- US-A- 2 970 452
- US-A- 3 494 513
- US-A- 3 592 360
- US-A- 3 847 307
- US-A- 3 847 308
- US-A- 3 847 309
- US-A- 3 847 310
- US-A- 3 895 746
- US-A- 3 940 031
- US-A- 3 940 032
- US-A- 3 944 117
- US-A- 4 538 749
- US-A- 5 407 092

## Description

### Arrière-plan de l'invention

L'invention concerne un réservoir à piston pressurisé par des gaz chauds.

Elle s'applique de façon privilégiée mais non limitative dans le contexte de la pressurisation d'un réservoir d'ergol liquide tel qu'utilisé par exemple dans les missiles tactiques ou stratégiques.

Le document US 3,494,513 décrit un réservoir de ce type. Ce réservoir comporte un piston apte à se déplacer sous l'effet de la poussée d'un gaz, pour diminuer le volume d'une chambre comportant un liquide, entraînant l'expulsion du liquide de cette chambre par une ouverture aménagée au fond de ce réservoir.

La chambre comportant le liquide de propulsion est délimitée par une vessie métallique télescopique initialement repliée en accordéon sur elle-même et qui se déplie progressivement sous la poussée du gaz.

Ce mécanisme présente plusieurs inconvénients.

Tout d'abord, l'agencement télescopique de la vessie est complexe à mettre en oeuvre et ne s'applique qu'aux réservoirs de forme conique.

Par ailleurs, lorsqu'elle se déplie, la vessie ne peut coller au plus près des parois internes du réservoir, si bien qu'une quantité non négligeable de liquide ne peut être expulsée de ce réservoir.

Surtout, ce système à vessie métallique ne peut être utilisé dans un réservoir pressurisé à gaz chauds, la vessie métallique ne jouant aucunement le rôle de barrière thermique. Ceci a deux conséquences : d'une part, la paroi du réservoir s'échauffe et, d'autre part, le gaz se refroidit, sa pression chute. Dans un mécanisme de propulsion à deux phases, il est alors nécessaire de repressuriser le gaz entre les deux phases.

US 3 847 307 A divulgue un réservoir de l'art antérieur selon le préambule de la revendication 1.

### Objet et résumé de l'invention

La présente invention est définie dans la revendication 1.

Elle a pour but principal de pallier aux inconvénients précités en proposant un réservoir comportant :
- une chambre de volume variable, comportant un liquide et délimitée par une paroi ;
- un piston apte à se déplacer dans le réservoir, sous la poussée d'un gaz de poudre à une température largement supérieure à celle du liquide pour diminuer le volume de ladite chambre ; et
- une membrane élastomère déformable plaquée contre une face du piston externe à la chambre, cette membrane étant apte à protéger thermiquement la paroi et à assurer l'étanchéité entre le piston et la paroi.

Conformément à l'invention, la membrane est en matière élastomère déformable.

La membrane élastomère peut notamment être à base de polymère, par exemple de caoutchouc.

La membrane élastomère remplit trois fonctions simultanément :
- fonction d'étanchéité entre le piston et la paroi;
- barrière thermique visant à empêcher sinon à diminuer fortement l'échauffement de la paroi et le refroidissement du gaz; et
- optimisation du volume de liquide éjecté.

Dans un mode particulier de réalisation de l'invention, la membrane élastomère a une épaisseur de l'ordre de 2 ou 3 millimètres. Elle peut ainsi être utilisée dans une application dans laquelle le liquide est à la température ambiante et le gaz propulsion à une température avoisinant 1000°C.

Bien entendu, l'épaisseur de la membrane peut varier notamment en fonction de la dimension du réservoir 10, du niveau de pression recherché, de la durée de la mission et du niveau de température.

Si le réservoir est utilisé dans un mécanisme de propulsion à deux phases, il n'est pas nécessaire de repressuriser le gaz entre ces phases, du fait de cette barrière thermique.

De façon avantageuse, l'invention peut s'appliquer à un réservoir de forme cylindrique.

Conformément à l'invention, le piston se déplace le long d'un axe formant conduit d'évacuation dudit liquide. Le liquide pénètre dans le conduit par une ouverture pratiquée à proximité de l'extrémité du conduit se trouvant au fond de la chambre.

L'évacuation de liquide peut se faire soit dans le sens de déplacement du piston, soit dans le sens opposé, soit conformément à l'invention dans les deux sens, cette dernière variante permettant d'alimenter deux systèmes propulsifs disposés de part et d'autre du réservoir.

En conséquence, le conduit d'évacuation comporte au moins une extrémité ouverte pour l'évacuation du liquide, l'extrémité côté fond de chambre étant ouverte pour permettre l'évacuation du liquide dans le sens de déplacement du piston, l'autre extrémité étant ouverte pour une évacuation dans le sens opposé.

Lorsque l'évacuation se fait dans le sens de déplacement du piston, une ouverture est pratiquée dans le fond du réservoir pour permettre l'éjection du liquide.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1 à 3 représentent, dans trois états différents, un réservoir selon un premier mode de réalisation qui ne fait pas partie de l'invention; et
- les figures 4 et 5 représentent des réservoirs dans un deuxième mode de réalisation qui ne fait pas partie de l'invention et un troisième mode de réalisation selon l'invention.

### Description détaillée d'un mode de réalisation

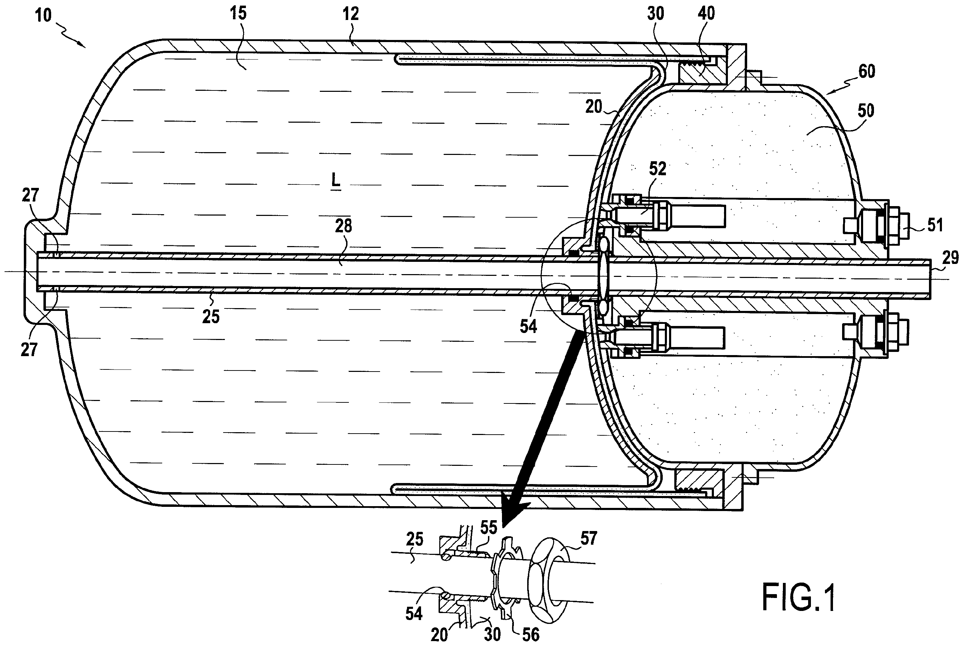

La **figure 1** représente un réservoir 10 dans un premier mode de réalisation qui ne fait pas partie de l'invention.

Ce réservoir 10 est délimité par une paroi 12 de forme générale cylindrique.

Il comporte un piston 20 apte à se déplacer le long d'un axe 25, ce piston délimitant ainsi, avec la paroi 12, une chambre 15 de volume variable remplie d'ergol liquide L à température ambiante, soit de l'ordre de 20°C.

Dans le mode de réalisation décrit ici, la chambre de volume variable est adossée à un générateur de gaz 60.

Conformément à l'invention, le réservoir 10 comporte une membrane élastomère déformable 30 plaquée contre une face du piston 20 externe à la chambre 15.

Cette membrane élastomère 30 assure également l'étanchéité entre le piston 20 et la paroi 12.

Dans le mode de réalisation décrit ici, la membrane 30 est maintenue dans le fond du réservoir 10, par des moyens de fixation annulaires 40 qui maintiennent la membrane contre la paroi 12.

L'étanchéité entre l'axe 25 et le piston 20 est réalisée au moyen d'un joint en anneau référencé 54.

Dans le mode de réalisation décrit ici, la membrane 30 est maintenue par pincement contre la face externe du piston 20 par une rondelle 56 enfilée sur un moyeu 55 du piston 20 et maintenue serrée par un écrou 57.

Dans ce mode de réalisation, le générateur de gaz 60 comporte un évidement cylindrique 58 complémentaire du moyeu 55 de sorte que le piston 20 peut être plaqué contre ce générateur lorsque le réservoir 10 est rempli.

Dans le mode de réalisation décrit ici, la rondelle 56 est rainurée pour un améliorer le maintien radial de la membrane 30.

Dans le mode de réalisation décrit ici, le générateur de gaz 60 comporte un ou plusieurs blocs de poudre 50, chaque bloc de poudre 50 étant doté d'un initiateur 51 apte à l'allumer.

De façon connue, cet allumage génère un gaz de poudre à très haute température, de l'ordre de 1000°C, éjecté par des buses 52 en direction de la membrane 30 et du piston 20.

Dans l'exemple décrit ici, le réservoir permet deux phases de propulsion successives.

La figure 1 représente l'état du réservoir avant la première phase de propulsion. Dans cet état, le volume de la chambre 15 est maximum.

En conséquence, le piston 20 est en position reculée et la membrane déformable 30 épouse la forme du compartiment à poudre 50.

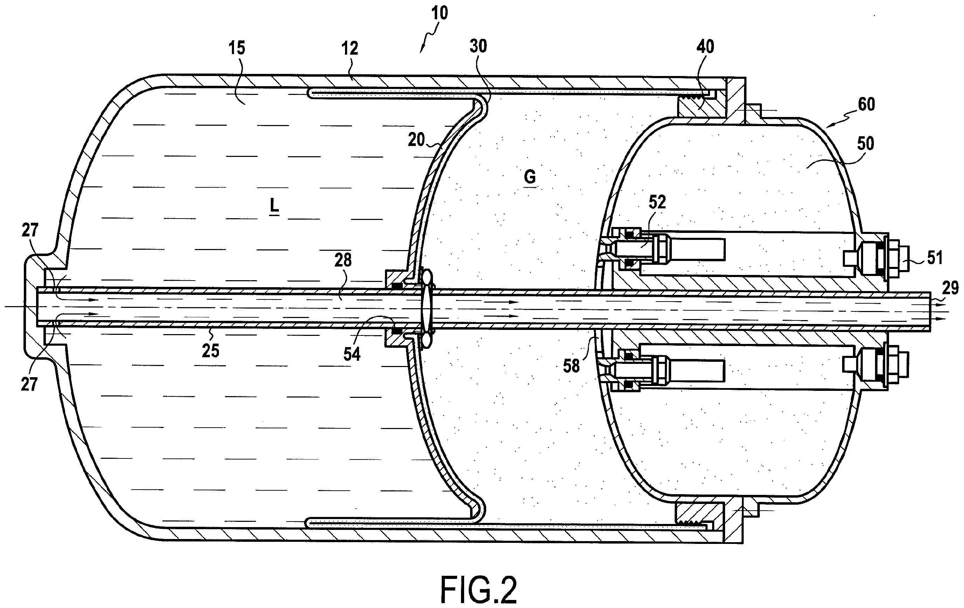

La **figure 2** représente le réservoir 10 après la première phase de propulsion.

Dans cet état, le volume de la chambre 15 contenant le liquide a diminué, sensiblement d'un tiers dans l'exemple décrit ici, le piston 20 et la membrane élastomère 30 s'étant déplacés sous l'effet du gaz pressurisé chaud G. Sous l'effet de la poussée du piston 20, une partie du liquide L se trouvant dans la chambre 15 est entrée par une ouverture 27 de l'axe 25 du piston et est évacuée, vers l'arrière sur la figure 2, par un conduit 28 aménagé à l'intérieur de cet axe. Dans ce mode de réalisation, le conduit 28 comporte une seule extrémité ouverte 29, du côté opposé à l'ouverture 27.

La membrane élastomère 30 assure la protection thermique des parois 12, si bien que la paroi 12 ne se réchauffe pas.

De façon très avantageuse, le gaz de poudre G reste chaud et donc sous pression.

De façon avantageuse, le liquide reste bien confiné pendant cette première phase de propulsion, tout déplacement de ce liquide étant, de façon connue, préjudiciable pendant cette phase de balistique.

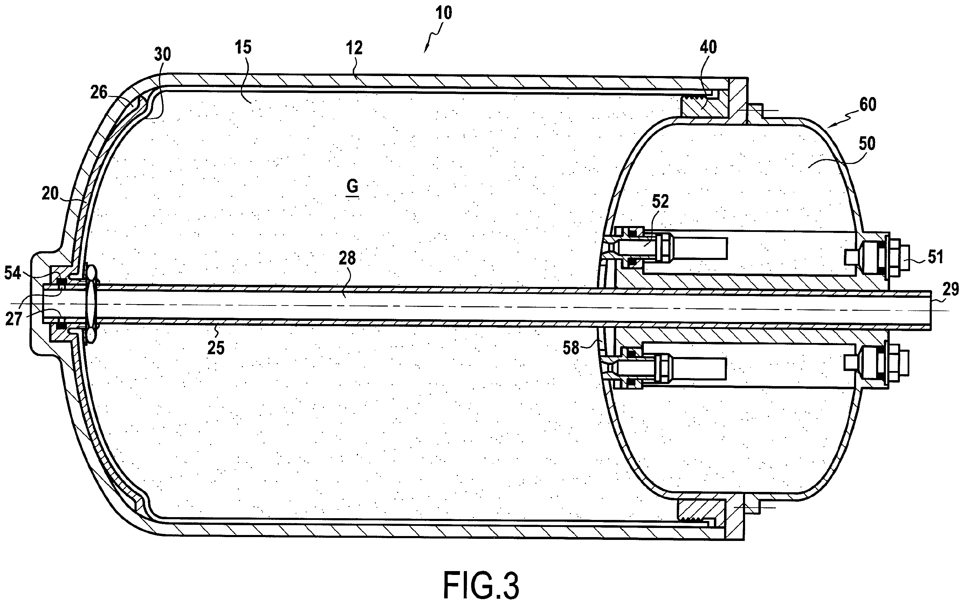

La **figure 3** représente le réservoir 10 après la deuxième phase de propulsion.

Dans cet état, le piston 20 vient buter contre l'extrémité du réservoir 10. Du fait que la membrane élastomère 30 colle sensiblement au fond du réservoir 10, l'espace 26 "perdu", c'est-à-dire contenant encore du liquide L après la deuxième phase de propulsion, est excessivement réduit.

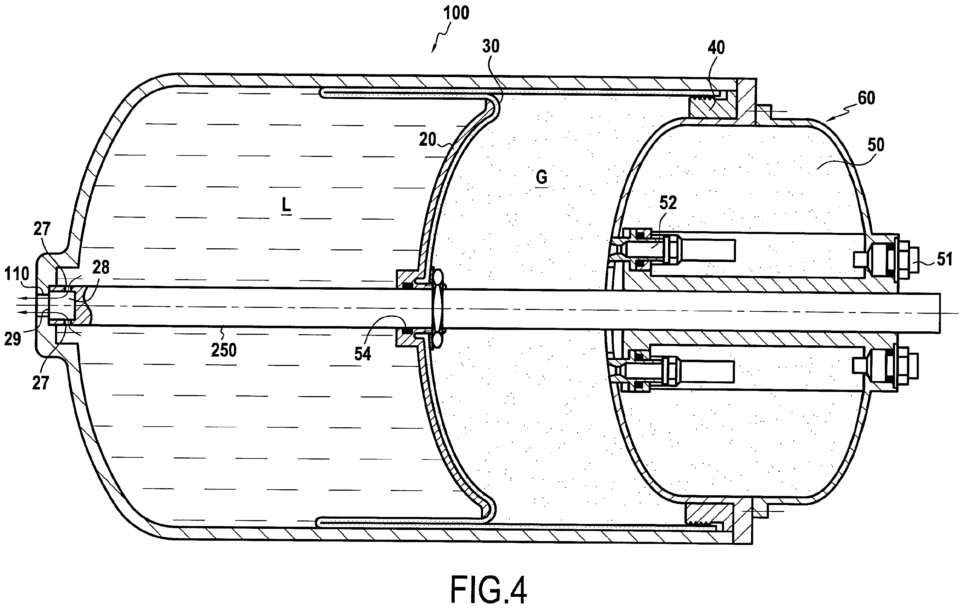

La **figure 4** représente un réservoir 100 dans un deuxième mode de réalisation qui ne fait pas partie de l'invention.

Ce réservoir 100 est quasiment identique au réservoir 10 décrit en référence aux figures 1 à 3.

Mais dans ce mode de réalisation, l'évacuation du liquide se fait dans le sens de déplacement du piston 20.

En conséquence, le conduit d'évacuation 28 comporte une seule extrémité ouverte 29, pratiquée du côté de l'ouverture 27 prévue pour l'entrée du liquide.

Préférentiellement, le conduit d'évacuation 28 est bouché juste derrière cette ouverture 27. Il se résume à une cavité.

Par ailleurs, le réservoir 100 présente en son fond une ouverture 110 en vis-à-vis de l'extrémité ouverte 27 du conduit 28.

Dans le mode de réalisation décrit ici, le joint en anneau 54 obture l'entrée 27 du conduit 28 lorsque le piston 10 est en fin de course.

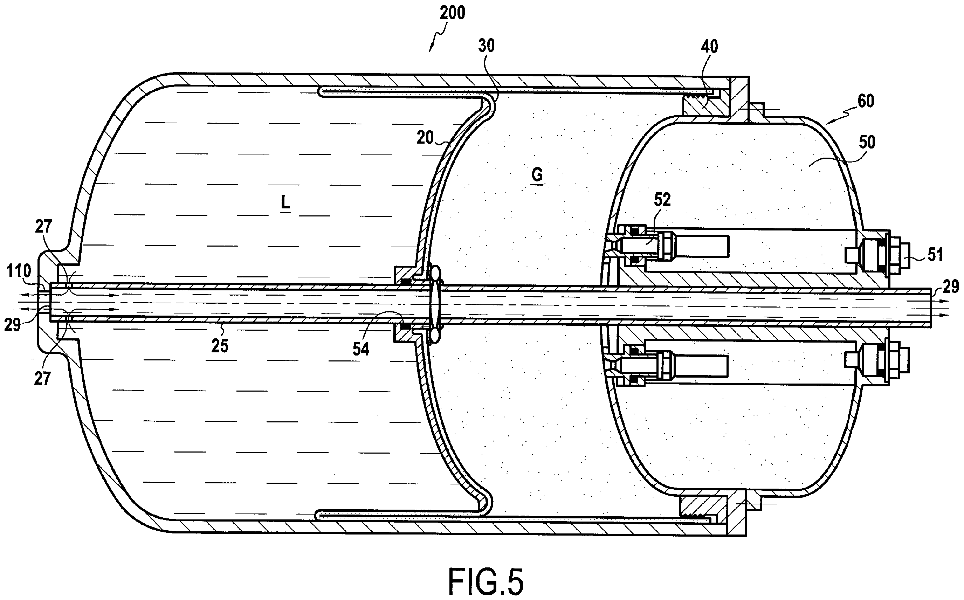

La **figure 5** représente un réservoir 200 conforme à l'invention dans un troisième mode de réalisation.

Ce réservoir 100 est quasiment identique aux réservoirs 10 et 100 décrits en référence aux figures 1 à 4.

Mais dans ce mode de réalisation, l'évacuation du liquide se fait dans les deux sens, les deux extrémités 29 du conduit d'évacuation 28 étant ouvertes.

## Revendications

1. Réservoir (10, 100) comportant :
- une chambre (15) de volume variable, comportant un liquide (L) et délimitée par une paroi (12) ; et
un piston (20) apte à se déplacer dans ledit réservoir (10, 100), sous la poussée d'un gaz de poudre (G) à une température largement supérieure à celle dudit liquide (L) pour diminuer le volume de ladite chambre (15) ;
ledit piston (20) se déplaçant le long d'un axe (25) formant conduit (28) d'évacuation dudit liquide (L), ledit réservoir (10, 100) étant **caractérisé en ce qu'**il comporte une membrane élastomère déformable (30) plaquée contre une face dudit piston (20) externe à ladite chambre (15), ladite membrane (30) étant apte à protéger thermiquement ladite paroi (12) et à assurer l'étanchéité entre ledit piston (20) et ladite paroi (12), et **en ce que** ledit conduit comporte deux extrémités, les deux extrémités (29) dudit conduit (28) étant ouvertes pour permettre l'évacuation dudit liquide (L) dans les deux sens de déplacement dudit piston (20) pour alimenter deux systèmes propulsifs situés de part et d'autre du réservoir.

## Patentansprüche

1. Behälter (10, 100), umfassend:
- eine Kammer (15) mit variablem Volumen, die eine Flüssigkeit (L) umfasst und durch eine Wand (12) begrenzt ist, und
- einen Kolben (20), der geeignet ist, sich in dem Behälter (10, 100) unter dem Schub eines Pulvergases (G) bei einer Temperatur, die weit größer als die der Flüssigkeit (L) ist, zu bewegen, um das Volumen der Kammer (15) zu verringern,
wobei sich der Kolben (20) entlang einer Achse (25), welche eine Leitung (28) zum Abführen der Flüssigkeit (L) bildet, bewegt, wobei der Behälter (10, 100) **dadurch gekennzeichnet ist, dass** er eine verformbare Elastomermembran (30) aufweist, die gegen eine Seite des Kolbens (20) außerhalb der Kammer (15) gedrückt wird, wobei die Membran (30) geeignet ist, die Wand (12) thermisch zu schützen und die Dichtigkeit zwischen dem Kolben (20) und der Wand (12) sicherzustellen, und dass die Leitung zwei Enden umfasst, wobei die beiden Enden (29) der Leitung (28) offen sind, um das Abführen der Flüssigkeit (L) in beiden Bewegungsrichtungen des Kolbens (20) zu ermöglichen, um zwei Antriebssysteme, welche auf beiden Seiten des Behälters gelegen sind, zu beaufschlagen.

## Claims

1. A tank (10, 100) comprising:
- a variable volume chamber (15) containing a liquid (L) and defined by a wall (12); and
a piston (20) suitable for moving in said tank (10, 100) under thrust from powder gas (G) at a temperature much higher than that of said liquid (LO) in order to decrease the volume of said chamber (15);
said piston (20) moving along a shaft (25) forming a duct for delivering said liquid (L), said tank being **characterized in that** it further comprises a deformable elastomer membrane (30) pressed against a face of said piston (20) outside said chamber (15), said membrane (30) being suitable for thermally protecting said wall (12) and for providing sealing between said piston (20) and said wall (12), **in that** said duct includes two ends, both ends (29) of said duct (28) being open for delivering said liquid (L) in the two travel directions of said piston (20) enabling two propulsion systems to be fed that are disposed on either side of the tank.
